# EUROPÄISCHE PATENTSCHRIFT

(11) **EP 0 359 960 B1**
(45) Veröffentlichungstag und Bekanntmachung des Hinweises auf die Patenterteilung: **15.12.1993**
(21) Anmeldenummer: 89114342.2
(22) Anmeldetag: 03.08.1989
(51) Int. Cl.: B60R 22/40

(54) **Vorrichtung zur Ruhigstellung eines Trägheitssensor-Hebels an einem Sicherheitsgurtaufroller**
Device for immobilising an inertia lever in a safety belt reel
Dispositif pour immobiliser un levier d'inertie dans un enrouleur de ceinture de sécurité

(30) Priorität: 19.09.1988 DE 3831819
(43) Veröffentlichungstag der Anmeldung: 28.03.1990
(73) Patentinhaber: TRW REPA GMBH, 73553 Alfdorf (DE)
(72) Erfinder: Schmid, Johannes, D-7070 Schwäbisch-Gmünd-Hussenhofen (DE); Kielwein, Thomas, D-7078 Leinzell (DE)
(74) Vertreter: Degwert, Hartmut, Dipl.-Phys.

(56) Entgegenhaltungen:
- DE-A- 3 431 911
- DE-U- 8 503 541
- US-A- 4 607 805

## Beschreibung

Die Erfindung betrifft eine Vorrichtung zur Ruhigstellung des mit einem Steuerzahnrad zusammenwirkenden Trägheitssensor-Hebels an einem Sicherheitsgurtaufroller mit Blockierautomatik, mit einem reibungsschlüssig mit der Gurtspule gekoppelten und um deren Achse durch zwei gehäusefeste Anschläge begrenzt verschwenkbar gelagerten Sensorruhigstellungs-Hebel.

Eine derartige Vorrichtung ist aus der US-A-4,607,805 bekannt und sie bildet die Merkmale des Oberbegriffs des Anspruchs 1. Für die fahrzeugsensitive Auslösung der Blockierautomatik ist dabei ein Trägheitssensor vorgesehen, der gewöhnlich als Trägheitsmasse eine Metallkugel aufweist, die in einer gehäusefesten Schale beweglich gelagert ist und auf der ein Trägheitssensor-Hebel aufliegt, der am Gehäuse schwenkbar gelagert ist und durch die Bewegung der Metallkugel um sein Schwenklager verschwenkt wird. Bei einer solchen Verschwenkung des Trägheitssensor-Hebels gelangt dessen als Steuerklinke ausgebildetes freies Ende in die Bewegungsbahn einer Steuerverzahnung am Umfang einer auf der Gurtspule begrenzt verdrehbar angeordneten Steuerscheibe, um die Drehung dieser Steuerscheibe anzuhalten. Die Relativdrehung zwischen Steuerscheibe und Gurtspule wird ausgenutzt, um eine am Gehäuse des Sicherheitsgurtaufrollers schwenkbar gelagerte Sperrklinke in Blockiereingriff mit einer Sperrverzahnung zu bewegen, die drehfest an die Gurtspule angeschlossen ist.

Im Fahrbetrieb auf unebener Straße treten Erschütterungen des Fahrzeugaufbaus auf, die dazu führen, daß die Metallkugel und folglich auch der Trägheitssensor-Hebel in kurzen Zeitabständen ausgelenkt werden, was eine als störend empfundene Geräuschentwicklung zur Folge hat. Es wurde daher bereits vorgeschlagen, die unerwünschten Flatterbewegungen des Trägheitssensor-Hebels durch eine Vorrichtung zu verhindern, die einen reibungsschlüssig mit der Gurtspule gekoppelten und um deren Achse durch zwei gehäusefeste Anschläge begrenzt verschwenkbar gelagerten Hebel aufweist. In dem durch die zwei Anschläge begrenzten Winkelbereich wird dieser Hebel durch die Gurtspule mitgeschleppt. In seiner einen Endstellung, die er erreicht, wenn die Gurtspule in Gurtaufrollrichtung gedreht wird, greift er mit seinem freien Ende an dem Trägheitssensor-Hebel an, um Flatterbewegungen desselben zu verhindern oder zumindest stark zu dämpfen. In seiner anderen Endstellung, die er erreicht, wenn die Gurtspule in Gurtabzugsrichtung gedreht wird, gibt er hingegen den Trägheitssensor-Hebel frei, so daß dessen Funktion nicht beeinträchtigt wird.

Dieser Sensorruhigstellungs-Hebel kann aus einem Federstahldraht hergestellt werden, der den Umfang einer drehfest an die Gurtspule angeschlossenen Lagerscheibe umgreift und reibungsschlüssig mit dieser gekoppelt ist. Die Reibungskraft zwischen dem Federstahldraht und der Lagerscheibe muß aber innerhalb enger Grenzen definiert sein, denn eine zu hohe Reibungskraft müßte durch eine stärker dimensionierte Aufrollfeder des Sicherheitsgurtaufrollers kompensiert werden, wodurch der Tragekomfort vermindert würde, während eine zu geringe Reibungskraft die Ruhigstellungsfunktion nicht gewährleisten könnte.

Es hat sich als überaus schwierig erwiesen, bei einer solchen Vorrichtung die erwünschte Reibungskraft innerhalb eines weiten Temperaturbereichs und unter Berücksichtigung von Alterungseffekten zur Verfügung zu stellen. Die Reibungskraft wird nämlich durch Maßtoleranzen, unterschiedliche Oberflächengüte, Temperatur- und Alterungseffekte stark beeinflußt. Bei Verwendung eines den Umfang einer Lagerscheibe umspannenden Federstahldrahtes können überdies lästige Quietschgeräusche bei der Relativdrehung zwischen beiden Teilen auftreten.

Der Erfindung liegt die Aufgabe zugrunde, bei einer Vorrichtung der eingangs beschriebenen Art eine innerhalb vorgegebener Grenzen definierte Reibungskraft zwischen dem Sensorruhigstellungs-Hebel und einem drehfest an die Gurtspule angeschlossenen Lagerteil zur Verfügung zu stellen.

Diese Aufgabe wird bei der gattungsgemäßen Vorrichtung erfindungsgemäß dadurch gelöst, daß der Sensorruhigstellungs-Hebel mit zwei kreisbogenförmigen Armen aus einem Kunststoffmaterial den Umfang eines kreisscheibenförmigen, drehfest an der Gurtspule gehaltenen Lagerteils umgreift, daß die zwei kreisbogenförmigen Arme durch eine sie umspannende metallische Ringfeder in Reibungseingriff mit der Umfangsfläche des Lagerteils gehalten sind und daß der Sensorruhigstellungs-Hebel einen mit dem Trägheitssensor-Hebel zusammenwirkenden radialen Betätigungsarm und einen starr mit diesem verbundenen, in Umfangsrichtung von diesem Betätigungsarm beabstandeten radialen Begrenzungsarm aufweist, der zwischen den zwei gehäusefesten Anschlägen verschwenkbar ist.

Bei dieser erfindungsgemäßen Ausgestaltung der Vorrichtung können das Lagerteil und die dieses umgreifenden Arme des Sensorruhigstellungs-Hebels aus Werkstoffen gefertigt werden, die lediglich für die gewünschte Reibungskraft ausgewählt und optimal gepaart werden können, da die Anlagekraft zwischen Lagerteil und den dieses umgreifenden Armen des Sensorruhigstellungs-Hebels überwiegend durch die Ringfeder bestimmt wird. Bei vorteilhaften Ausführungsformen der Erfindung ist das Lagerteil mit einer bogenförmigen Nut an seinem Außenumfang versehen, in welche die kreisbogenförmigen Arme des Sensorruhigstellungs-Hebels eingreifen. Vorteilhaft ist weiterhin, daß die kreisbogenförmigen Arme ihrerseits an ihrem Außenumfang eine Nut aufweisen, in welcher die Ringfeder gehalten ist.

Die erfindungsgemäße Vorrichtung enthält nur Teile, die ohne Einhaltung strenger Toleranzen in kostengünstigen Massenherstellungstechniken und aus kostengünstigen Werkstoffen gefertigt werden können. Unangenehme Begleiterscheinungen wie Quietschgeräusche oder dergleichen werden durch optimale Materialpaarung sicher vermieden.

Weitere Merkmale und Vorteile der Erfindung ergeben sich aus der folgenden Beschreibung einer Ausführungsform der Erfindung und aus der Zeichnung, auf die Bezug genommen wird. In der Zeichnung zeigen:
- Fig. 1: eine schematische Teilansicht der erfindungsgemäßen Vorrichtung;
- Fig. 2: eine teilweise im Schnitt gezeigte Seitenansicht eines Sensorruhigstellungs-Hebels auf seinem Lagerteil bei der in Fig. 1 gezeigten Ausführungsform; und
- Fig. 3: eine Seitenansicht des Sensorruhigstellungs-Hebels der in den Fig. 1 und 2 gezeigten Ausführungsform.

Da Sicherheitsgurtaufroller mit Blockierautomatik in zahlreichen Ausführungen bekannt sind, werden hier nur diejenigen Elemente beschrieben, die für die Funktion der Ruhigstellung des Trägheitssensor-Hebels von Belang sind.

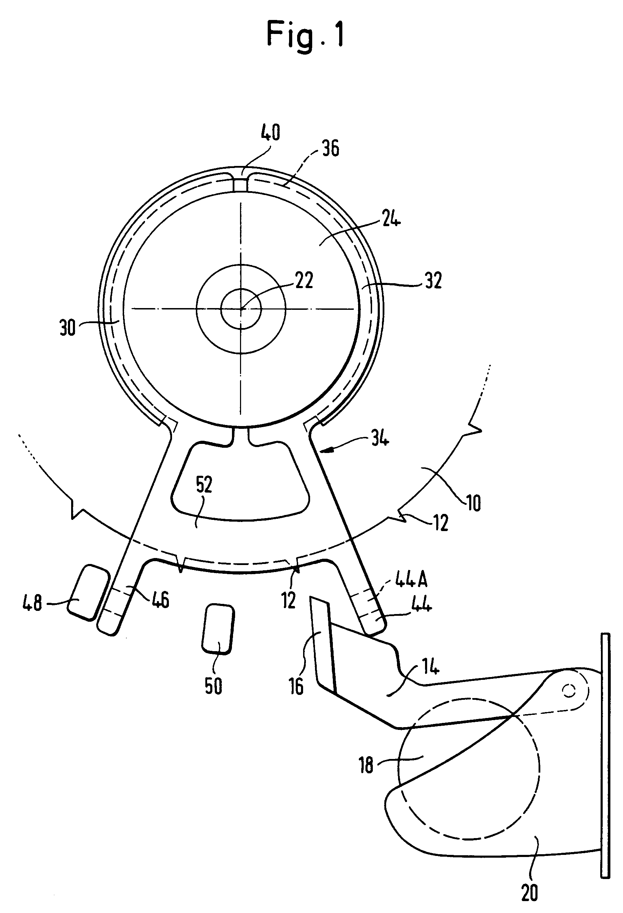

Die Fig. 1 zeigt schematisch eine Steuerscheibe 10, die begrenzt verdrehbar an eine (nicht gezeigte) Gurtspule angeschlossen ist und an ihrem Umfang eine Steuerverzahnung mit Steuerzähnen 12 aufweist. Mit diesen Steuerzähnen 12 der Steuerscheibe 10 wirkt ein Trägheitssensor-Hebel 14 zusammen, der am Gehäuse des Sicherheitsgurtaufrollers schwenkbar gelagert ist und an seinem freien Ende eine Steuerklinke 16 aufweist sowie auf einer Metallkugel 18 aufliegt, die in einer gehäusefesten Schale 20 begrenzt beweglich gelagert ist.

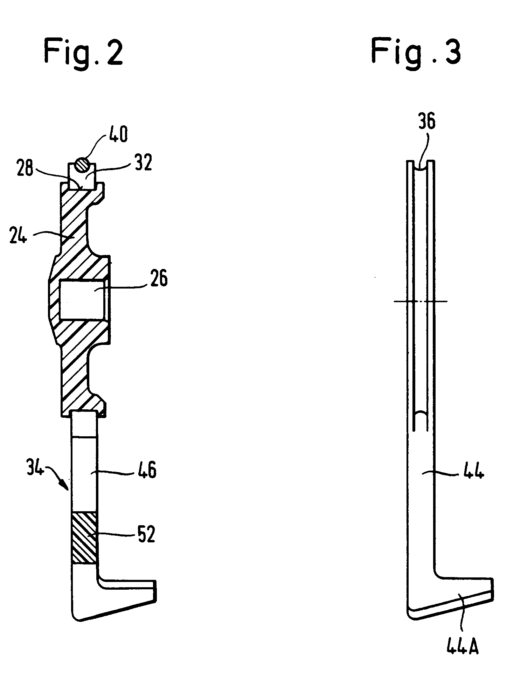

Drehfest an die Achse 22 der Gurtspule angeschlossen ist ein nabenförmiges Lagerteil 24 (Fig. 2), in dessen konzentrische Bohrung 26 das Ende der Achse der Gurtspule eingepreßt ist. Das Lagerteil 24 ist an seinem Außenumfang mit einer umlaufenden bogenförmigen Nut 28 versehen, in der zwei kreisbogenförmige Arme 30, 32 eines allgemein mit 34 bezeichneten Sensorruhigstellungs-Hebels gehalten sind. Diese kreisbogenförmigen Arme 30, 32 weisen ihrerseits an ihrem Außenumfang eine Nut 36 (Fig. 3) auf, in die eine Ringfeder 40 diese Arme 30, 32 umschließend eingreift. Der Sensorruhigstellungs-Hebel 34 ist mit zwei radialen Armen versehen, die in Umfangsrichtung voneinander beabstandet sind. Der erste Arm ist in Fig. 1 mit dem Bezugszeichen 44 bezeichnet und bildet einen Betätigungsarm, der mit dem Trägheitssensor-Hebel 14 zusammenwirkt. Der zweite, mit 46 bezeichnete Arm bildet einen Begrenzungsarm, welcher mit dem Betätigungsarm 44 durch einen kreisbogenförmigen Steg 52 starr verbunden ist und mit zwei gehäusefesten Anschlägen 48, 50 zusammenwirkt, um den Verschwenkungswinkel des Sensorruhigstellungs-Hebels 34 zwischen den Anschlägen 48, 50 zu begrenzen. Wie in Fig. 3 zu sehen ist, weist der Betätigungsarm 44 einen axialen Ansatz 44A auf, der an der Steuerklinke 16 des Trägheitssensor-Hebels 14 zur Anlage kommt, wenn der Begrenzungsarm 46 an dem gehäusefesten Anschlag 48 anliegt, wie in Fig. 1 gezeigt. In diese Stellung gelangt der Sensorruhigstellungs-Hebel 14, wenn die Gurtspule durch die Aufrollerfeder des Sicherheitsgurtaufrollers in Aufrollrichtung, also in Fig. 1 im Uhrzeigersinn, gedreht wird. In dieser Stellung verhindert der Betätigungsarm 44 ein Anheben der Steuerklinke 16, um Flatterbewegungen des Trägheitssensor-Hebels 14 bei Fahrzeugerschütterungen zu verhindern oder zumindest stark zu dämpfen. Wird die Gurtspule hingegen in Gurtabzugsrichtung, also in Fig. 1 entgegen dem Uhrzeigersinn, gedreht, so gelangt der Begrenzungsarm 46 bereits nach einer Verschwenkung über wenige Winkelgrade an dem Anschlag 50 zur Anlage, wobei der Betätigungsarm 44 sich von der Steuerklinke 16 so weit entfernt hat, daß diese nun vor dem nächsten angetroffenen Steuerzahn 12 eingreifen kann, um die Drehung der Steuerscheibe 10 anzuhalten.

Der gesamte Sensorruhigstellungs-Hebel 34 mit Betätigungsarm 44, Begrenzungsarm 46, den beiden kreisbogenförmigen Armen 30, 32 und dem Steg 52 bildet ein einziges Kunststoffteil, so daß der Winkelabstand zwischen Betätigungsarm und Begrenzungsarm 46 genau definiert ist. Jeder der kreisbogenförmigen Arme 30, 32 erstreckt sich vorzugsweise über etwas weniger als 180°, so daß also zwischen beiden Enden dieser Arme ein Spalt verbleibt, der verhindert, daß die Arme sich unmittelbar aneinander abstützen. Die Anlagekraft der kreisbogenförmigen Arme 30, 32 an dem Lagerteil 24 wird so überwiegend durch die Dimensionierung der Ringfeder 40 bestimmt.

Wenngleich verschiedene Materialpaarungen für das Lagerteil 24 und den einteiligen Sensorruhigstellungs-Hebel 34 geeignet sind, hat es sich als besonders vorteilhaft erwiesen, das Lagerteil aus einem Polyacetal-Kunststoff, insbesondere aus Polyoxymethylen, und den Sensorruhigstellungs-Hebel aus Polyamid zu fertigen.

## Patentansprüche

1. Vorrichtung zur Ruhigstellung des mit einem Steuerzahnrad (10) zusammenwirkenden Trägheitssensor-Hebels (14) an einem Sicherheitsgurtaufroller mit Blockierautomatik, mit einem reibungsschlüssig mit der Gurtspule gekoppelten und um deren Achse (22) durch zwei gehäusefeste Anschläge (48, 50) begrenzt verschwenkbar gelagerten Sensorruhigstellungs-Hebel (34), dadurch gekennzeichnet, daß dieser Sensorruhigstellungs-Hebel (34) mit zwei kreisbogenförmigen Armen (30, 32) aus einem Kunststoffmaterial den Umfang eines kreisscheibenförmigen, drehfest an der Gurtspule gehaltenen Lagerteils (24) umgreift, daß diese zwei kreisbogenförmigen Arme (30, 32) durch eine sie umspannende metallische Ringfeder (40) in Reibungseingriff mit der Umfangsfläche des Lagerteils (24) gehalten sind und daß der Sensorruhigstellungs-Hebel (34) einen mit dem Trägheitssensor-Hebel (14) zusammenwirkenden radialen Betätigungsarm (44) und einen starr mit diesem verbundenen, in Umfangsrichtung von diesem Betätigungsarm (44) beabstandeten radialen Begrenzungsarm (46) aufweist, der zwischen den zwei gehäusefesten Anschlägen (48, 50) verschwenkbar ist.

2. Vorrichtung nach Anspruch 1, dadurch gekennzeichnet, daß das Lagerteil (24) eine bogenförmige Nut (28) an seinem Außenumfang aufweist, in welche die kreisbogenförmigen Arme (30, 32) eingreifen.

3. Vorrichtung nach Anspruch 1 oder 2, dadurch gekennzeichnet, daß die kreisbogenförmigen Arme (30, 32) an ihrem Außenumfang eine Nut (36) aufweisen, in welcher die Ringfeder (40) gehalten ist.

4. Vorrichtung nach einem der vorstehenden Ansprüche, dadurch gekennzeichnet, daß das Lagerteil (24) aus einem Polyacetal-Kunststoff, insbesondere aus Polyoxynethylen, und der einteilig mit seinen beiden kreisbogenförmigen Armen (30, 32) geformte Sensorruhigstellungs-Hebel (34) aus Polyamid besteht.

## Claims

1. A device for inactivating the inertial sensor lever (14) cooperating with a control gear wheel (10), on a safety belt retractor having an automatic locking means, comprising a sensor inactivating lever (34) which is frictionally coupled with the belt drum and is bearinged for pivoting about the axis (22) thereof to an extent limit by two abutments (48, 50) secured in relation to to the housing, characterized in that two circularly arcuate arms (30, 32) made of a synthetic resin material of this sensor inactivating lever (34) embrace the periphery of a bearing part (24) having the form of a circular disk and locked as regards rotating on the belt drum, in that these two circularly arcuate arms (30, 32) are held by an annular metal spring (40) encircling them in frictional engagement with the circumferential surface of the bearing part (24) and in that the sensor inactivating lever (34) has a radial actuating arm (44), in cooperation with the inertial sensor lever (14) and a radial limiting arm (46) connected with the same rigidly and spaced in the circumferential direction from this actuating arm (44), which limiting arm (46) is able to be pivoted between two abutments (48, 50) fixed in relation to the housing.

2. The device as claimed in claim 1, characterized in that the bearing part (24) has an arcuate groove (28) on its outer periphery, into which the circularly arcuate arms (30, 32) fit.

3. The device as claimed in claim 1 or in claim 2, characterized in that the circularly arcuate arms (30, 32) have a groove (36) on their outer periphery, in which groove the annular spring (40) is held.

4. The device as claimed in any one of the preceding claims, characterized in that the bearing part (24) consists of a polyacetal synthetic resin, more particularly of polyoxymethylene, and the sensor inactivating lever (34), which is integrally molded with its two circularly arcuate arms (30, 32), consists of polyamide.

## Revendications

1. Dispositif pour l'immobilisation du levier (14) d'un capteur à inertie, coopérant avec une roue dentée (10) de commande, sur un enrouleur de ceinture de sécurité à blocage automatique, comportant un levier d'immobilisation de capteur (34), accouplé par friction à la bobine de ceinture et monté pivotant, autour de son axe (22), de façon limitée par deux butées (48, 50) solidaires du boîtier, caractérisé en ce que ce levier d'immobilisation de capteur (34) entoure, par deux bras (30, 32) en arc de cercle, en matière plastique, le pourtour d'un élément formant palier (24) en forme de disque circulaire, maintenu fixe en rotation sur la bobine de ceinture, en ce que ces deux bras (30, 32) en arc de cercle sont maintenus en prise, par friction, avec la surface périphérique de l'élément formant palier (24), par un anneau-ressort (40) métallique, les entourant, et en ce que le levier d'immobilisation de capteur (34) comporte un bras d'actionnement (44) radial, coopérant avec le levier de capteur à inertie (14), ainsi qu'un bras de délimitation (46), relié de façon fixe au bras d'actionnement (44), espacé périphériquement de celui-ci, lequel bras de délimitation peut pivoter entre les deux butées (48, 50) solidaires du boîtier.

2. Dispositif selon la revendication 1, caractérisé en ce que l'élément formant palier (24) présente, sur son pourtour extérieur, une rainure (28) en arc dans laquelle s'engagent les bras (30, 32) en arc de cercle.

3. Dispositif selon la revendication 1 ou 2, caractérisé en ce que les bras (30, 32) en arc de cercle présentent, sur leur pourtour extérieur, une rainure (36) dans laquelle est maintenu l'anneau-ressort (40).

4. Dispositif selon l'une quelconque des revendications 1 à 3, caractérisé en ce que l'élément formant palier (24) est en matière plastique à base de polyacétal, en particulier en polyoxyméthylène, et en ce que le levier d'immobilisation de capteur (34), moulé d'une seule pièce avec ses deux bras (30, 32) en arc de cercle, est en polyamide.
